Europäisches Patentamt

European Patent Office

Office européen des brevets

(11) Publication number: **0 081 299**
**B1**

(12) **EUROPEAN PATENT SPECIFICATION**

(45) Date of publication of patent specification: **11.03.87**

(51) Int. Cl.⁴: **B 25 J 9/00**

(21) Application number: **82305993.6**

(22) Date of filing: **10.11.82**

(54) Modular robot arm.

(30) Priority: **11.11.81 GB 8134016**

(43) Date of publication of application:
**15.06.83 Bulletin 83/24**

(45) Publication of the grant of the patent:
**11.03.87 Bulletin 87/11**

(84) Designated Contracting States:
**AT BE CH DE FR IT LI SE**

(56) References cited:
**DE-A-2 624 378**
**DE-A-2 754 609**
**FR-A-2 324 407**
**GB-A-2 053 148**

(73) Proprietor: **Robotic Systems Limited**
**Leyton Avenue Mildenhall**
**Suffolk IP28 7BL (GB)**

(72) Inventor: **Pigott, Norman Brian**
**South Road**
**Bishop's Stortford Hertfordshire (GB)**

(74) Representative: **Matthews, Heather Clare et al**
**Keith W Nash & Co Pearl Assurance House**
**90-92 Regent Street**
**Cambridge CB2 1DP (GB)**

Courier Press, Leamington Spa, England.

## Description

Field of Invention

This invention concerns remotely controlled devices often referred to as robots by which functions may be performed such as mechanical handling, machining, working, assembling and other functions related to the manufacture or treatment of products.

Background to the Invention

So-called robots or robotic arms have become common place in the manufacturing industry both in this country and abroad. At the heart of most such systems is the so-called arm which is an engineering equivalent of a human arm in that it includes various rigid sections joined by joints which allow a degree of hinging pivoting sliding or other movement between adjoining sections. Devices are provided at the joints to produce movement of one section relative to another by pivoting or hinging or sliding and the power to the various drive devices is controlled so as to cause the various sections to move and articulate in a controlled manner. By anchoring one end of the arm assembly either on a platform or to a workbench or to the floor or ceiling or wall, so the remote or outboard end of the arm assembly can be made to move relative to the fixed end and clearly the number of positions to which the outboard end can be moved will be dictated to a large extent by the number of articulating sections.

Clearly for a complicated function in which a number of different degrees of movement are required to enable accurate and closely controlled movement of the outboard end of the arm to be performed, a large number of different articulating sections will be required and separate drives and controls therefor. On the other hand there are many applications where only a two or three section arm would be adequate to perform the specific task for which the arm is required and the cost and complexity of the multiple section arm would not be justified.

What is perhaps more important is that hitherto robot arms and the like have tended to be customised to specific applications and processes so that an arm designed for one procedure whilst functioning admirably for that procedure is either not sufficiently capable or grossly over complex for other applications. Industrial processes can change, manufacturing techniques alter and the life of a dedicated robot arm specific to one particular function may be limited. With the high initial outlay of installing robot arms, it is clearly desirable that redundancy of arms should be minimised and it is an object of the present invention to provide an improved form of robot structure which is less likely to suffer from redundancy than has hitherto been the case.

Published G.B. Patent Specification 2053148A (GB—A—2 053 148) discloses a robotic arm structure wherein a plurality of multi-component sections are independently powered each by means of a motor and gearbox, so that each section is controlled independently from other sections. However, it is also important, for versatility and ready adaptation to future usages, that the robotic arm structure should equally have a versatile and adaptable means of control of its independent motors. The precharacterising part of claim 1 is based on this document.

Summary of the Invention

According to the present invention there is provided a robotic structure comprising a plurality of sections each section being connected to an adjacent section and having first and second components movably connected to each other and a mounting plate to which can be attached either a tool or workpiece holder or the like or a further section, wherein the sections are independently powered each by means of an electric motor and a gearbox with the motor of each section being controlled independently from the other sections, characterised in that the independent motors are controlled in direction and velocity by respective signals obtained from a central controller, each section including a resolver which provides feedback to the central controller, and in that each section includes an electromagnetic brake for locking the components of the section in any desired relative position.

If desired, one or more further extension sections, each being independently powered and independently controlled, may be connected in similar manner, each section being similarly movable relative to the upstream section to which it is connected, to produce an arm of desired length and configuration. A tool or workpiece holder or the like can be attached to the outermost section.

Sections of different types, capable of different types of movement including linear, rotary and pivoting movement relative to the upstream section may be provided. In this way, by interconnecting appropriate sections in an appropriate order an arm having desired characteristics can be built up.

The present invention is thus based on a modular approach to robot arm construction as regards both arm sections and controls therefor.

For example, a robotic arm may be formed from the following parts:—

1) a fixed support arm, adapted to be secured to a support such as a workbench, floor, ceiling, wall or the like;

2) a first extension section pivotally joined to the fixed section about a single axis of pivoting; and

3) a sub-assembly pivotally mounted about a parallel axis to the pivoting axis but at the outboard end of the first extension section, the sub-assembly including a plate to which can be attached either a tool or workpiece holder or the like or a second extension section.

The second extension section may be similar to the first extension section or may be selected from a range of extension sections each adapted to be secured at one end to a sub-assembly mounting plate of a preceding extension section and adapted by its own sub-assembly mounting plate at its opposite end to be attached to a further extension section or workpiece or tool or the like as before described.

By providing a range of different extension sections each having a carefully selected power unit associated therewith, so that the weight and power requirements at each section along an arm can be matched, so an arm can be constructed from standard interconnectable modules having any number of degrees of freedom and axes of pivoting and of any length and complexity as required. The only limiting factor is the capability of the primary drive unit associated with the fixed or stationary section to move the total weight of the arm and tool assembly. To this end, for any given drive unit in the stationary or fixed section, there will be a maximum length and weight carrying capability of an arm to be controlled.

The mounting plates by which the different extension sections can be secured together are preferably drilled in such a manner that one section can be orientated relative to an adjoining section through for example a right angle or can be secured in line with the adjoining section by simply locating the mounting plates which are to be bolted together in one position or another. By arranging that the apertures in the mounting plates only align in either one or the other of the two positions, it is not then possible for the two sections to be bolted together other than in the desired configuration of in line or orthogonally.

Where a greater degree of constructions or flexibility is desired, a larger number of aligned positions between apertures in the mounting plates is provided for so that the extension sections can be mounted one to the other at angles other than in line or at 90°.

The invention will thus allow an arm of extreme simplicity or considerable complexity to be constructed from standard elements or sections. Where a particular handling requirement exists the arm can be designed by the manufacturer and supplier from standard components but the resulting arm will, nevertheless, have just the same capability and dexterity as if it had been designed from scratch from non-standard parts.

What is perhaps more important is that if the arm outlives its required primary function, it can be modified by the addition of new parts, replacement of existing parts or removal of unwanted parts from the overall assembly so as to provide the hardware necessary to perform another function. It is then only necessary to reprogramme the control signals to the arm to allow it to perform the new function.

During use, wear and tear on the different parts of an arm can result in failure and breakdown and an arm constructed in accordance with the present invention can of course, be repaired and recommissioned with a minimum of time and effort by relatively unskilled personnel since it is only necessary to disconnect the arm from its power source, unbolt the offending section or sections and replace with standard sections from a stock of spare parts to enable the arm to be recommissioned. The offending parts can then be serviced or sent away for repair etc., as required.

In some instances part of the arm may be required to operate in a hostile environment even though other parts of the arm are not so required. According, therefore, to another feature of the invention, not only are a range of extension sections provided but the range preferably includes sections formed from materials compatible with different environments, fluid media and the like so as to allow an arm to be constructed from conventional parts for those sections of the arm which do not operate in the hostile environment and from special purpose parts (i.e. constructionally similar but formed from suitable materials or coated with suitable materials) to allow those sections of the arm which are to operate in a hostile environment to be capable of withstanding the hostile attack that would otherwise occur.

Each section of the robotic arm is preferably electrically driven by a d.c. power amplifier associated with the motor to control its direction and velocity, the power amplifier receiving information from the controller via a digital to analogue converter.

Associated control components for each section, including the amplifier, the digital to analogue converter, servo and drive, are preferably also of modular nature, and can be incorporated into a suitable housing as appropriate.

According to another preferred feature of the invention, electrical connections may be provided in the adjoining faces of the mounting plates so that when the mounting plate of one sub-assembly is secured to an extension section, electrical continuity is automatically established.

If the electrical connections are not to be orientation sensitive, the electrical connections may be by way of pins adapted to engage annular or at least arcuate contact strips in the mating surface. In this way electrical continuity will be maintained whether the one section has been bolted to the other in line or at right angles.

On the other hand there may be situations where it is desirable to electrically indicate that one section has been fitted to an adjoining section in a particular way (i.e. either in line or at right angles) and in this event multiple electrical connections may be provided which are adapted to be electrically interconnected in one fashion if the mounting plates are orientated relatively in one particular way and electrically connected in another way altogether if the plates are orientated in a different way. In this way, for example, different electrical parts may be established depending on the relative orientation of the two sections of the arm or a circuit or circuit element contained in an outboard arm section can be arranged to be connected into an overall electrical circuit when the outboard section is mounted in one way but for example not when it is mounted in another way or is connected differently into the overall electrical circuit when the outboard arm section is mounted differently. Thus, for example, an electrical diode may be connected one way in a circuit if the outboard arm section is mounted in line and in the reverse direction in the same circuit if the outboard arm is mounted at right angles. A suitable electrical sensing circuit looking at the polarity of the diode can thus determine which way the outboard arm has been fitted relative to its inboard counter-part and this can either be used as additional information to a micro-computer or micro-processor unit adapted to control the movement of the overall arm or can be used to generate a warning signal to indicate that the arm has for example been incorrectly fitted for the control signals which will subsequently be generated for the arm.

In addition to the basic range of extension sections, further extension sections may be provided capable of producing a rotary movement as between one section and the next about an axis which is not perpendicular to the length dimension of the extension section concerned or is capable of producing a linear sliding movement of a mounting assembly or sub-assembly for attachment to a further extension section so as to allow linear extension or retraction to be provided for.

Structures of the invention find application in many fields, for example integrated with existing machinery and tooling on an automobile production line, to be used, eg for spot welding.

The invention will now be described by way of example with reference to the accompanying drawings in which:—

Fig. 1 illustrates a relatively simple robot arm assembly constructed from component parts embodying the invention;

Fig. 2 is a diagrammatic illustration of a more complex multiple section robot arm embodying the invention;

Fig. 3 is a diagrammatic illustration of a further robot structure embodying the invention;

Fig. 4 is a block diagram illustrating the components of a single section or module, and

Fig. 5 is a block diagram illustrating the overall arrangement of modules and controller.

Detailed Description of Drawings

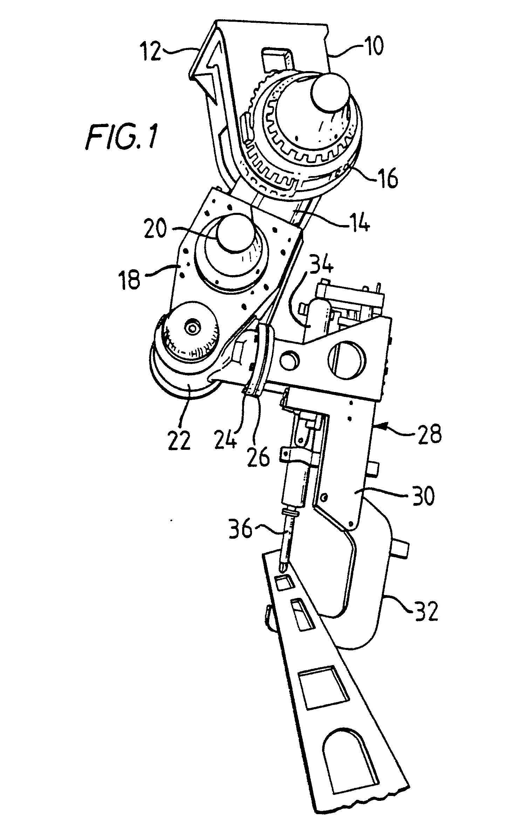

Fig. 1 a fixed section 10 includes a mounting plate 12 by which it can be bolted to the ceiling or to a workbench or the floor or the like. Pivotally mounted to the fixed section 10 is an arm 14 which protrudes from a gearbox and motor assembly generally designated 16. The arm 14 includes a mounting plate (not shown) at its outboard end onto which can be bolted a first extension section 18. The latter includes drive means 20 for causing a sub-assembly at the outboard end of the extension section 18 to rotate. The sub-assembly is denoted by reference numeral 22 and includes its own mounting plate 24 to which the mounting plate of a further extension of the arm can be bolted such as a plate shown at 26.

In the embodiment shown in Fig. 1 the plate 26 is the mounting plate of a final drive unit generally designated 28 which carries a mounting plate 30 to which a welding anvil 32 is attached and a linear drive unit 34 to which a spot welding electrode 36 is attached.

The device shown in Fig. 1 demonstrates the versatility of a robotic arm constructed in accordance with the invention in that a further extension section similar to section 18 could, if required, be located between the mounting plate 24 and 26 so as to extend the length and articulation possibilities of the overall arm.

Whether or not the plates 24 and 26 are bolted together as shown or through the intermediary of one or more extension sections such as 18 (not shown) the plate 26 may be orientated relative to the plate 24 before being bolted thereto or to an intermediate extension section so that the orientation of the unit 28 can be adjusted during assembly.

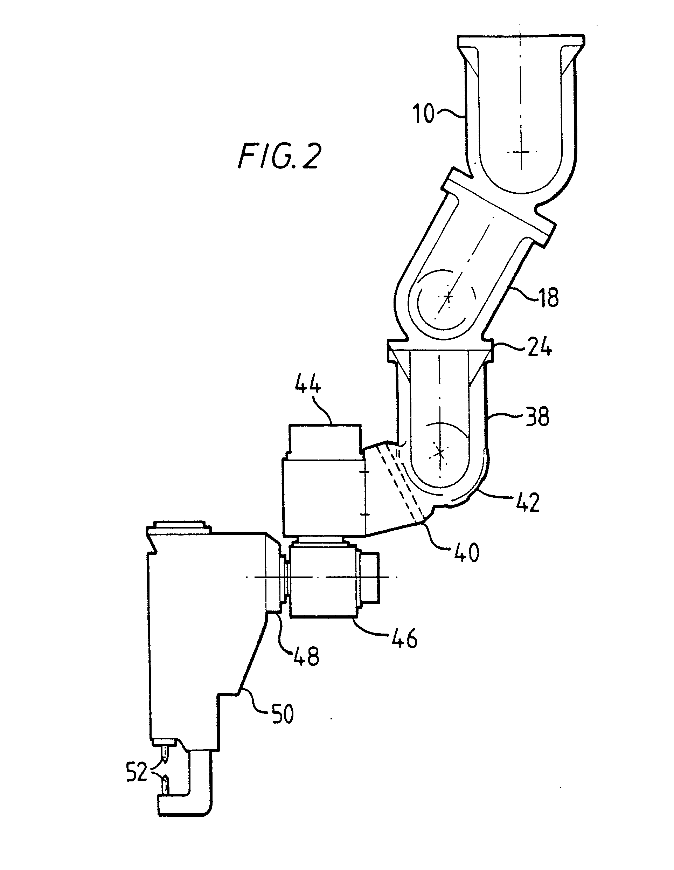

Fig. 2 demonstrates how a more complex arm assembly can be constructed from similar parts to those shown in Fig. 1. Thus a fixed base section 10 can be pivotally joined to the first of a pair of extension sections the first of which corresponds to 18 in Fig. 1 and a second extension section 38. The latter is bolted to the mounting plate 24 of the sub-assembly 22 (not shown) at the outboard end of the section 18.

The arm shown in Fig. 2 demonstrates the use of two other types of extension section which in this case are located at the outboard end of the overall arm.

The first of these comprises a rotary unit adapted to be bolted to the mounting plate 40 of the rotary sub-assembly 32 at the outboard end of the section 38 and includes a rotary drive unit 44 and gearbox assembly 46. The latter includes an end plate 48 which is adapted to be fitted to a slide drive or linear slide final unit 50 which may for example be similar in construction and design to the assembly 28 of Fig. 1.

To this end, a welding tool having opposed electrodes 52 is shown as forming part of the assembly 50.

It will be seen that if a rotary drive is not required, the rotary drive unit may be dispensed with and either the mounting plate (not shown) associated with the final unit 50 may be attached by bolting to the mounting plate 40 of the second extension section 38 or may be replaced by a further extension section similar to 38.

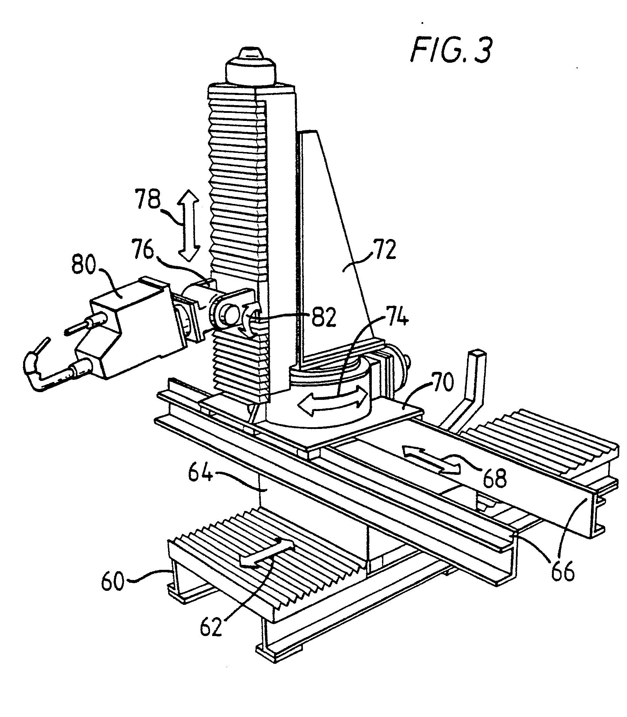

The arrangement shown in Fig. 3 comprises a support 60 adapted to be secured to the floor or other horizontal surface. Support 60 comprises a track for guiding horizontal linear movement in the direction of arrows 62 of section or module 64 mounted thereto. Module 64 in turn includes track members 66 for guiding horizontal linear movement in the direction of arrows 68 (at right angles to the direction of arrows 62) of a further section or module 70. Module 72 is mounted on module 70 for rotary movement in horizontal plane, as indicated by arrows 74. Module 72 in turn carries a vertical track for guiding vertical movement of further module 76, as indicated by arrows 78. A final module 80, incorporating welding equipment, is pivotally mounted to module 76 for movement as indicated by arrows 82.

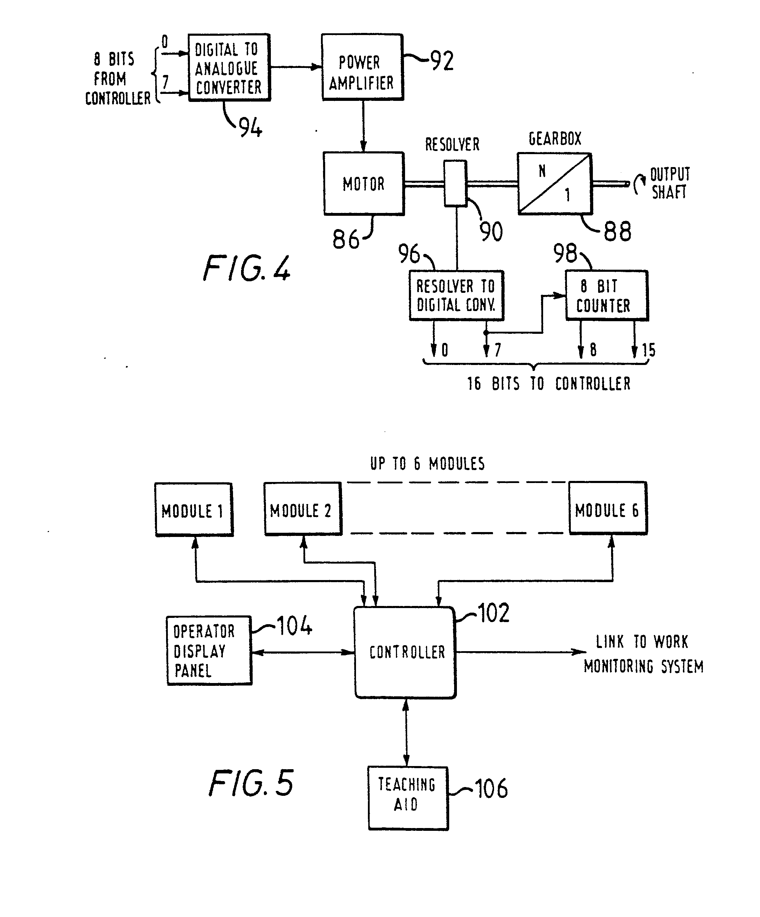

Fig. 4 illustrates the components of a typical individual section or module, such as those described above.

The illustrated module includes a printed electric circuit motor 86 and a gearbox 88 sized to suit the load capability of the particular motor shaft. The gearbox has a nominal reduction ratio of 160:1, although ratios in the range 256:1 to 100:1 are possible.

A resolver 90 is fitted to the motor shaft to provide feedback to a central controller (not shown) relating to the position of the motor shaft.

A d.c. power amplifier 92 is associated with the motor 86 to control the direction and velocity of the motor. The power amplifier is driven by the digital output of the control element via a digital to analogue converter 94 with a resolution of 8 bits, thus providing 127 discrete velocities in each direction (7 bits for velocity and 1 bit for direction). The control input to the power amplifier is in the range ±10 volts.

The position of the module is determined from the resolver 90. The resolver provides an output which is fed to a resolver-to-digital converter (RDC) 96 of 8-bit resolution. The RDC output is further subdivided by an 8-bit counter 98 and the resultant 16 bits of information supplied to the controller to provide positional information relating to the module.

An electromagnetic brake (not shown) is also mounted on the motor shaft. The brake has to be energised to release the mechanism so that when the module is not moving, the whole structure is rendered solid.

The harmonic drive comprising gearbox 88 consists of three main components:

wave generator, a flexispline and a circular spline.

The wave generator is a thin wall ballrace fitted onto an elliptical former. The flexispline fits over the wave generator and is elastically deformed as the wave generator turns. The circular spline is an internally toothed solid steel ring which engages the flexispline across the major axis of the wave generator. About 15% of the total number of teeth are engaged and the two sets of gears are equally pitched.

There is, however, a difference of two teeth between the flexispline and the circular spline so that each revolution of the wave generator will precess the engagement point, producing a relative motion.

The output shaft of the gearbox is connected to the circular spline while the input shaft drives the wave generator. The result is a high efficiency torque converter — as the wave generator drives the flexispline — and a high ratio gearset as the circular spline moves on just two teeth for every revolution of the wave generator.

As shown in Fig. 5, a number of modules 100 (6 in the illustrated arrangement) are controlled by a single central controller 102. The controller is further linked to a operator display panel 104, a teaching aid 106 and a work monitoring system.

## Claims

1. A robotic structure comprising a plurality of sections (10, 18), each section being connected to an adjacent section and having first and second components (12, 14: 22) movably connected to each other and a mounting plate to which can be attached either a tool or workpiece holder or the like or a further section, wherein the sections are independently powered each by means of an electric motor and a gearbox (16, 20), with the motor of each section being controlled independently from the other sections, characterised in that the independent motors are controlled in direction and velocity by respective signals obtained from a central controller, each section including a resolver (90) which provides feedback to the central controller, and in that each section includes an electromagnetic brake for locking the components of the section in any desired relative position.

2. A structure as claimed in claim 1, characterised in that the first and second components of each section are capable of relative linear, rotary or pivoting movement.

3. A structure as claimed in claim 1 or claim 2, characterised in that the first component (12) of one of the sections (10) is adapted to be secured to a support such as a workbench, floor, ceiling, wall or the like, the second component (14) of said one of the sections being pivotally joined to the first component about a single axis of pivoting, and wherein a second section comprises first and second components (18, 22) pivotally mounted about a parallel axis to the pivoting axis of the first section, but at the outboard end thereof.

4. A structure as claimed in claim 3, characterised in that the second section is selected from a range of sections each adapted to be secured at one end to a mounting plate of a preceding section and adapted by its own mounting plate at its opposite end to be attached to a still further section or workpiece holder or tool.

5. A structure as claimed in claim 3 or claim 4, wherein electrical connections are provided in the adjoining faces of the mounting plate so that when the mounting plate of one section is secured to another section, electrical continuity is automatically established.

6. A structure as claimed in any of claims 1 to 5, wherein a d.c. power amplifier (92) is associated with each motor (86) to control direction and velocity, the power amplifier receiving information from the controller via a digital to analogue converter.

## Patentansprüche

1. Eine Roboterkonstruktion mit mehreren Abschnitten (10, 18), wobei jeder Abschnitt mit einem benachbarten Abschnitt verbunden ist und eine erste und eine zweite beweglich miteinander verbundene Komponente (12, 14; 22) und eine Montageplatte aufweist, an der entweder ein Werkzeug oder Werkstückhalter oder dergleichen oder ein weiterer Abschnitt angebracht werden kann, wobei die Abschnitte jeweils unabhängig durch einen elektrischen Motor und einen Getriebekasten (16, 20) angetrieben werden, wobei der Motor jedes Abschnittes unabhängig von den anderen Abschnitten gesteuert wird, dadurch gekennzeichnet, daß die unabhängigen Motoren in der Richtung und Geschwindigkeit durch aus einem zentralen Kontroller erhaltene entsprechende Signale gesteuert werden, jeder Abschnitt einen Resolver (90) enthält, der dem zentralen Kontroller eine Rückkopplung zuführt, und daß jeder Abschnitt zum Verriegeln der Komponenten des Abschnittes in jeder beliebigen Relativlage eine elektromagnetische Bremse enthält.

2. Eine Konstruktion wie in Anspruch 1 beansprucht, dadurch gekennzeichnet, daß die erste und die zweite Komponente jedes Abschnittes eine relative Linear-, Dreh- oder Schwenkbewegung durchführen kann.

3. Eine Konstruktion wie in Anspruch 1 oder Anspruch 2 beansprucht, dadurch gekennzeichnet, daß die erste Komponente (12) eines der Abschnitte (10) an einer Abstützung, wie zum Beispiel einer Werkbank, einem Boden, einer Decke, einer Wand oder dergleichen befestigt werden kann, die zweite Komponente (14) von einem der Abschnitte um eine einzige Schwenkachse verschwenkbar an der ersten Komponenten angelenkt ist, und wobei ein zweiter Abschnitt eine erste und eine zweite Komponente (18, 22) enthält, die um eine zu der Schwenkachse des ersten Abschnittes parallele Achse, aber an dessen Außenende, verschwenkbar befestigt sind.

4. Eine Konstruktion wie in Anspruch 3 beansprucht, dadurch gekennzeichnet, daß der zweite Abschnitt aus einem Bereich von Abschnitten ausgewählt ist, die jeweils an einem Ende an einer Montageplatte eines vorhergehenden Abschnittes befestigt werden können und an ihrem entgegengesetzten Ende mit ihrer eigenen Montageplatte an einen noch anderen Abschnitt oder Werkstückhalter oder Werkzeug befestigt werden können.

5. Eine Konstruktion wie in Anspruch 3 oder Anspruch 4 beansprucht, wobei elektrische Verbindungen in den aneinander angrenzenden Seiten der Montageplatte vorgesehen sind, so daß bei Befestigung einer Montageplatte eines Abschnittes an einem anderen Abschnitt einen elektrische Kontinuität automatisch hergestellt ist.

6. Eine Konstruktion wie in irgendeinem der Ansprüche 1 bis 5 beansprucht, wobei ein Gleichspannungs-Leistungsverstärker (92) zum Steuern der Richtung und Geschwindigkeit jedem Motor (86) zugeordnet ist und der Leistungsverstärker seine Information von dem Kontroller über einen Digital-Analog-Wandler erhält.

**Revendications**

1. Structure robotisée comprenant plusieurs tronçons (10, 18), chaque tronçon étant raccordé à un tronçon adjacent et ayant un premier et un second élément (12, 14; 22) raccordés l'un à l'autre de manière mobile et une plaque de montage à laquelle peut être fixé un support d'outil ou de pièce ou analogue ou un tronçon supplémentaire, dans laquelle les tronçons sont mus indépendamment chacun par un moteur électrique et un réducteur (16, 20), le moteur de chaque tronçon étant commandé indépendamment des autres tronçons, caractérisée en ce que les moteurs indépendants sont commandés en sens et en vitesse par des signaux respectifs provenant d'un organe central de commande, chaque tronçon comprenant un résolveur (90) qui transmet des signaux de réaction à l'organe central de commande, et en ce que chaque tronçon comporte un frein électromagnétique destiné à verrouiller les éléments du tronçon dans toute position relative voulue.

2. Structure selon la revendication 1, caractérisée en ce que le premier et le second élément de chaque tronçon peuvent présenter un déplacement relatif linéaire, rotatif ou par pivotement.

3. Structure selon l'une des revendications 1 et 2, caractérisée en ce que le premier élément (12) de l'un des tronçons (10) est destiné à être fixé à un support tel qu'une table de travail, un sol, un plafond, un mur ou analogue, le second élément (14) de ce premier tronçon étant articulé sur le premier élément autour d'un axe unique de pivotement, et dans lequel un second tronçon comprenant un premier et un second élément (18, 22) est monté sous forme articulée autour d'un axe parallèle à l'axe de pivotement du premier tronçon mais à l'extrémité externe de celui-ci.

4. Structure selon la revendication 3, caractérisée en ce que le second tronçon est choisi dans une gamme de tronçons destinés chacun à être fixé à une première extrémité à une plaque de montage d'un tronçon précédent et destiné à être fixé, par sa propre plaque de montage placée à l'autre extrémité, à un tronçon supplémentaire ou un support de pièce ou un outil.

5. Structure selon l'une des revendications 3 et 4, dans laquelle des connexions électriques sont formées dans les faces adjacentes des plaques de montage afin que, lorsque la plaque de montage d'un tronçon est fixée à un autre tronçon, une continuité électrique soit automatiquement établie.

6. Structure selon l'une quelconque des revendications 1 à 5, dans laquelle un amplificateur de puissance (92) en courant continu est associé à chaque moteur (86) afin que le sens et la vitesse du moteur soient commandés, l'amplificateur de puissance recevant une information de l'organe de commande par l'intermédiaire d'un convertisseur numérique-analogique.

FIG.1

FIG. 2

FIG. 3

FIG.4

FIG.5

4